# FASCICULE DE BREVET EUROPEEN

(11) **EP 0 720 702 B1**
(45) Date de publication et mention de la délivrance du brevet: **13.10.1999**
(21) Numéro de dépôt: 95925037.4
(22) Date de dépôt: 11.07.1995
(51) Int. Cl.: F16D 13/75

(54) **MECANISME D'EMBRAYAGE A DISPOSITIF DE RATTRAPAGE D'USURE, NOTAMMENT POUR VEHICULE AUTOMOBILE**
KUPPLUNG MIT NACHSTELLVORRICHTUNG, INSBESONDERE FÜR KRAFTFAHRZEUGE
CLUTCH INCLUDING A WEAR TAKE-UP DEVICE, IN PARTICULAR, FOR MOTOR VEHICLES

(30) Priorité: 21.07.1994 FR 9409274
(43) Date de publication de la demande: 10.07.1996
(73) Titulaire: VALEO, 75017 Paris (FR)
(72) Inventeur: BACHER, Michel, F-95580 Andilly (FR)
(74) Mandataire: Gamonal, Didier
(86) Numéro de dépôt international: FR9500927
(87) Numéro de publication internationale: WO9603591

(56) Documents cités:
- FR-A- 2 606 477
- GB-A- 2 022 729
- GB-A- 2 071 792

## Description

La présente invention concerne un embrayage à friction, notamment pour véhicule automobile, et se rapporte plus particulièrement à un mécanisme de rattrapage de l'usure des garnitures de friction, opérant continûment au fur et à mesure de l'usure desdites garnitures et assurant ainsi une levée d'embrayage constante au cours du temps.

Un embrayage à friction classique comporte un plateau de réaction, éventuellement en deux parties pour formation d'un volant amortisseur, calé en rotation sur un premier arbre, usuellement un arbre menant tel que le vilebrequin du moteur à combustion interne, et portant à sa périphérie externe un couvercle auquel est rattaché au moins un plateau de pression.

Le plateau de pression est solidaire en rotation du couvercle et du plateau de réaction mais peut se déplacer axialement sous la sollicitation des moyens élastiques à action axiale commandés, généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boîte de vitesses, est intercalé entre le plateau de pression et le plateau de réaction de façon à être enserré entre eux lorsque l'embrayage est en position engagée.

Le diaphragme commandant le mouvement axial du plateau de pression est actionné par une butée d'embrayage coulissante axialement.

Au cours de la durée de vie d'un tel embrayage, les garnitures de friction ainsi que les contre-matériaux (plateau de pression et plateau de réaction) s'usent ce qui provoque une variation de la force de serrage entre le disque de friction d'une part et les plateaux de pression et de réaction d'autre part, en raison des modifications des conditions de travail du diaphragme.

La course d'embrayage varie également ainsi que la force nécessaire pour débrayer.

On connaît par le document US-A-4,207,972 un dispositif de rattrapage d'usure dans lequel un premier plateau, en l'occurrence le plateau de pression, est en deux parties coaxiales déplaçables axialement l'une par rapport à l'autre de façon que l'épaisseur globale du premier plateau ait tendance à augmenter au fur et à mesure que l'épaisseur des garnitures de friction diminue et que par voie de conséquence les conditions de travail du diaphragme ne varient pas.

Dans ce document, les éléments coaxiaux du premier plateau sont déplaçables axialement l'un par rapport à l'autre à l'encontre d'un dispositif ou mécanisme de rattrapage d'usure des garnitures de friction précitées.

Ce dispositif comporte des moyens de rampe portés de manière complémentaire par deux pièces, l'une des pièces étant fixe en rotation, tandis que l'autre pièce est mobile en rotation.

La mise en mouvement de ces pièces est commandée par un déclencheur sensible à l'état d'usure des garnitures de friction. Ces pièces interviennent entre les deux parties du premier plateau.

Un tel dispositif permet de rattraper de manière continue l'usure des garnitures de friction.

Néanmoins, dans des conditions sévères d'utilisation, le plateau de pression s'échauffe ainsi que le reste des constituants de l'embrayage en sorte que l'on passe par un point singulier avec rattrapage d'usure, le plateau de pression se mettant en cône.

La présente invention a pour objet de pallier cet inconvénient.

Suivant l'invention un embrayage du type sus-indiqué est caractérisé en ce qu'il comporte une pièce rotative de réarmement associée à l'une des parties du premier plateau et soumise à l'action de moyens de verrouillage pilotés par le déclencheur, en ce que des premiers moyens élastiques à action circonférentielle et des moyens d'engrènement à jeu interviennent entre la pièce de réarmement et la pièce mobile en rotation du mécanisme rattrapeur d'usure, et en ce que la pièce de réarmement est soumise à l'action de seconds moyens élastiques à action circonférentielle agissant à l'encontre des premiers moyens élastiques en intervenant entre la pièce d'armement et l'une des parties du premier plateau, et en ce que les second moyens élastiques exercent sur la pièce de réarmement un couple supérieur à celui exercé par lesdits premiers moyens élastiques.

Grâce à l'invention, on arme la pièce de réarmement pendant qu'on est en position embrayage engagé - garnitures usées -, puis on effectue un rattrapage d'usure d'un angle prédéterminé par les moyens d'engrènement à jeu lors du désengagement de l'embrayage. Avec un embrayage à diaphragme on utilise l'accroissement d'énergie de celui-ci, pour armer le système, l'embrayage étant engagé. Ainsi on évite les points singuliers, le dispositif de rattrapage d'usure agissant de manière continue selon un angle prédéterminé. On initialise donc le rattrapage en position embrayage engagé.

Les seconds moyens élastiques sont choisis pour surmonter l'action des premiers moyens élastiques. Ils exercent donc un couple supérieur sur la pièce de réarmement leur force étant par exemple supérieure à celle des premiers moyens élastiques.

De préférence, le dispositif de rattrapage d'usure intervient au niveau du plateau de réaction en deux parties coaxiales.

Ce dispositif de rattrapage d'usure intervient à la périphérie interne du plateau de réaction proprement dit offrant une face de friction pour le disque de friction.

Ainsi ce dispositif de rattrapage d'usure est implanté à un endroit relativement froid et le mécanisme d'embrayage, notamment le plateau de pression, demeure inchangé. En outre l'inertie de la pièce d'armement est moindre et une bonne ventilation peut être obtenue.

Dans une forme de réalisation les moyens de verrouillage consistent en un frein immobilisant en rotation la pièce de réarmement.

En variante, le verrouillage peut être réalisé par coopération de formes. Par exemple la pièce de verrouillage peut présenter des crans coopérant avec des crans pratiqués dans la pièce d'armement.

Les moyens de verrouillage comportent avantageusement une languette élastique soumise à l'action du déclencheur.

Dans une forme de réalisation ce déclencheur est monté coulissant dans le plateau de réaction proprement dit précité et est propre à agir sur la languette, en étant soumis à l'action du plateau de pression.

Ainsi lorsque les garnitures de friction s'usent le plateau de pression se rapproche du plateau de réaction proprement dit en sorte qu'au bout d'une certaine course il agit sur le déclencheur, lequel agit à son tour sur la languette des moyens de verrouillage pour libérer ceux-ci.

La pièce de réarmement (l'embrayage étant engagé) peut alors se déplacer angulairement et armer le dispositif de rattrapage d'usure et ce d'un angle prédéterminé par les moyens d'engrènement à jeu.

En variante le dispositif de rattrapage d'usure est implanté au niveau du plateau de pression.

Dans ce cas, le couvercle ou le diaphragme est propre à agir sur la languette des moyens de verrouillage pour déverrouiller ceux-ci.

Avantageusement pour ce faire le couvercle présente une patte de butée.

La description qui va suivre illustre l'invention en regard des dessins annexés dans lesquels :
- la figure 1 est une vue en coupe axiale d'un embrayage à dispositif de rattrapage d'usure ;
- la figure 2 est une vue analogue à la figure 1 sans le couvercle et une partie du flasque de support du plateau de réaction et montrant le déclencheur et les moyens de verrouillage ;
- la figure 3 est une vue partielle en perspective montrant le déclencheur, le dispositif de verrouillage, la pièce d'armement et le mécanisme de rattrapage d'usure selon l'invention ;
- la figure 4 est une vue analogue à la figure 3 montrant l'état normal du dispositif de rattrapage d'usure après rattrapage ;
- la figure 5 est une vue analogue à la figure 4 montrant le dispositif de rattrapage d'usure à l'état embrayage engagé après usure des garnitures de friction et armement ;
- la figure 6 est une vue analogue à la figure 5 montrant le dispositif de rattrapage d'usure à l'état débrayé après récupération du jeu ;
- la figure 7 est une vue schématique montrant l'implantation du dispositif de rattrapage d'usure de la figure 1 au niveau du plateau de pression.

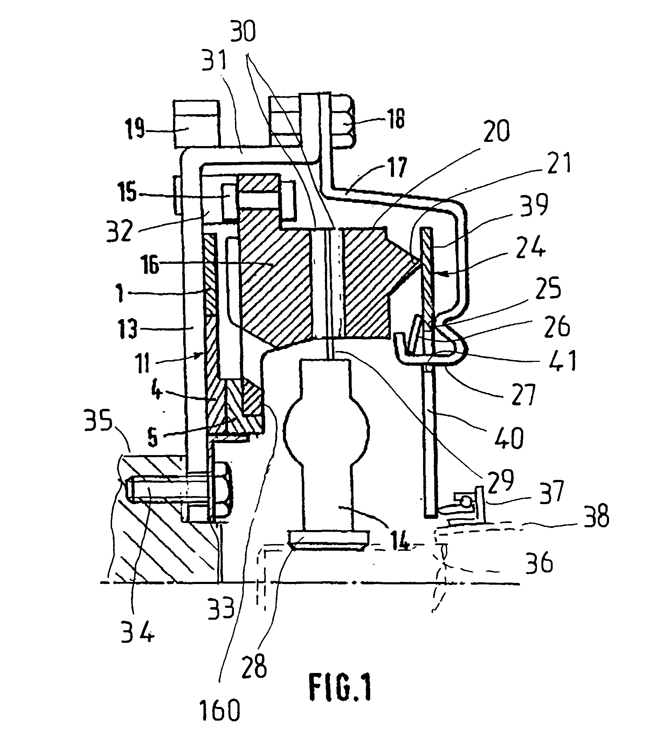

A la figure 1 est représenté un embrayage à diaphragme pour véhicule automobile. Cet embrayage comporte successivement axialement un plateau de réaction en deux parties 13,16, un disque de friction 14, un plateau de pression 20, un diaphragme 24 et un couvercle 17.

Le plateau de réaction 13,16 est propre à être calé en rotation sur un arbre menant, ici le vilebrequin 35 du moteur à combustion interne, tandis que le disque de friction 14 est accouplé élastiquement ou rigidement à un moyeu 28 calé en rotation sur l'arbre 36 de la boite de vitesses.

Le disque de friction 14 présente à sa périphérie externe un disque de support 29 portant à fixation sur chacune de ses faces des garnitures de friction 30.

Le plateau de pression 20 est solidaire en rotation du plateau de réaction 13,16 et du couvercle 17.

Plus précisément l'ensemble plateau de pression 20 - diaphragme 24 et couvercle 17 forme un ensemble unitaire, appelé mécanisme d'embrayage, rapporté par le rebord radial de son couvercle 17 en forme d'assiette creuse, sur le plateau de réaction 13,16.

Ici le plateau de pression 20 est lié en rotation au couvercle, de manière connue en soi, par l'intermédiaire de languettes tangentielles 23 fixées à l'une de leur extrémité à une plage du rebord radial du couvercle par des organes de fixation (non visibles) et fixés à leur autre extrémité à une patte radiale saillante 22 du plateau de pression 20 à l'aide d'organes de fixation 12, ici sous forme de rivets.

Le diaphragme 24, de forme tronconique à l'état libre, est monté de manière pivotante sur le couvercle 17.

Plus précisément ce diaphragme 24 comporte une partie périphérique 39 en forme de rondelle Belleville et une partie centrale fragmentée en doigts radiaux 40 par des fentes. Ces fentes débouchent à une de leur extrémité dans l'ouverture centrale du diaphragme et à leur autre extrémité, à la périphérie interne de la rondelle Belleville 39, dans un orifice élargi 41.

Le fond du couvercle présente un embouti 25 pour formation d'un appui primaire pour le diaphragme 24.

Des pattes de fixation 27 sont issues d'un seul tenant par pliage et découpe de la périphérie interne de ce fond, lesdites pattes 27 traversant chacune axialement chacune un orifice 41 précité pour présenter à leur extrémité libre une partie pliée radialement en direction opposée à l'axe de l'ensemble pour formation d'un coude de calage et montage d'une couronne-jonc de forme tronconique 26 offrant un appui secondaire en regard de l'appui primaire 25.

Plus précisément la partie périphérique externe de la rondelle Belleville 39 du diaphragme 24 s'appuie sur un bossage fragmenté 21 du plateau de pression 20, tandis qu'à sa périphérie interne ladite rondelle Belleville 39 est pincée entre les appuis primaire 25 et secondaire 26.

Normalement l'embrayage est engagé, et les garnitures de friction 30 sont pincées entre le plateau de pression 20 et la partie 16, décrite ci-après du plateau de réaction 13,16. Pour ce faire, le diaphragme 24 prend appui sur l'appui secondaire 25 et sur le bossage 21 du plateau 20 pour solliciter ledit plateau de pression 20 en direction du plateau de réaction 16.

Ainsi les garnitures de friction sont enserrées entre lesdits plateaux de pression et de réaction. Lorsque les garnitures 30 sont neuves, le diaphragme 24 est globalement plan (figure 1). Pour désengager l'embrayage il faut agir à l'aide d'une butée de débrayage schématisée en 37 sur l'extrémité des doigts 40 du diaphragme 24.

De manière connue en soi, cette butée de débrayage est soumise à l'action d'un organe de commande, tel qu'une fourchette de débrayage ou le piston d'une commande hydraulique, et présente un élément d'attaque, usuellement sous forme d'un roulement à billes, dont l'une des bagues est prolongée pour contact avec les doigts 40 du diaphragme.

Cette butée 37 est montée coulissante le long d'un tube-guide 38 solidaire du carter de la boîte de vitesses (non représenté) et entourant l'arbre d'entrée 36 de ladite boîte.

Ainsi en poussant sur les extrémités des doigts 40, à l'aide de la butée 37, on fait pivoter le diaphragme, qui prend alors appui sur son appui secondaire 26, ce qui a pour effet d'annuler la charge exercée par le diaphragme sur le plateau de pression 20 ; les languettes 23 rappellant le plateau 20 en direction du fond du couvercle 17.

Les garnitures de friction 30 sont alors libérées et l'embrayage est désengagé.

Ici on notera que le couvercle 17 est fixé par les vis 18 sur la partie 13 du plateau de réaction 13,16 décrit ci-après.

Ainsi lorsque les garnitures de friction 30 s'usent, le plateau de pression 20 se rapproche du plateau de réaction 16, en sorte que l'inclinaison du diaphragme 24, et donc la charge exercée par ledit diaphragme 24 sur le plateau 20 varie. La position de la butée 37 change également.

Pour éviter cela il est prévu un dispositif ou mécanisme de rattrapage d'usure 11 monté au sein de l'embrayage et agissant de manière continue.

Ce mécanisme de rattrapage d'usure intervient entre deux parties coaxiales, que présente l'un des plateaux de pression et de réaction, dit premier plateau par simple commodité.

Ce mécanisme de rattrapage d'usure des garnitures de friction 30 précitées comporte des moyens de rampe 90,91. Les deux parties coaxiales du premier plateau sont liées en rotation l'une avec l'autre en étant mobiles axialement l'une par rapport à l'autre, par l'intermédiaire de moyens de liaison.

La mise en mouvement de ces parties est commandée par un déclencheur 3 sensible à l'état d'usure des garnitures de friction 30.

Pour ce faire le mécanisme 11 comporte deux pièces 4,5. L'une 5 est fixe en rotation, tandis que l'autre 4 est mobile en rotation. Chacune de ces pièces porte de manière complémentaire les moyens de rampe, par exemple du type hélicoïdal, en étant associés à l'une des parties du premier plateau. Les pièces du rattrapeur interviennent donc entre les deux parties du premier plateau.

Plus précisément suivant l'invention un embrayage à mécanisme de rattrapage d'usure du type sus-indiqué est caractérisé en ce qu'il comporte une pièce rotative de réarmement 1 associée à l'une des parties du premier plateau 13,16-20 soumise à l'action de moyens de verrouillage 2 pilotés par le déclencheur 3, en ce que des premiers moyens élastiques à action circonférentielle 6 et des moyens d'engrènement à jeu 8,80 interviennent entre la pièce de réarmement 1 et la partie mobile en rotation 4 du mécanisme rattrapeur d'usure 11, et en ce que la pièce de réarmement 1 est soumise à l'action de seconds moyens élastiques à action circonférentielle 7 agissant à l'encontre desdits premiers moyens élastiques en intervenant entre la pièce de réarmement 1 et l'une 13 des parties du premier plateau 13,16,20.

Les moyens de verrouillage 2 empêchent la pièce de réarmement 1 de tourner. Ils sont dimensionnés de manière à résister à la force exercée par le ressort 6 et aux forces d'inertie qui s'exercent sur la pièce de réarmement 1.

Lesdits seconds moyens 7 sont choisis pour surmonter l'action des premiers moyens 6. Ils exercent un couple supérieur sur la pièce de réarmement. Ici lesdits seconds moyens élastiques ont une force supérieure à celle des premiers moyens élastiques 6 et agissent à l'encontre de ceux-ci.

Ici (figure 1) le mécanisme de rattrapage d'usure intervient au sein du plateau de réaction 13,16. Ce plateau de réaction comporte un flasque de support 13 portant à sa périphérie externe une couronne de démarrage 19 propre à être entraînée par le démarreur du véhicule. Il comporte également un plateau de réaction 16 proprement dit. Le plateau de réaction 13,16 comporte donc deux parties coaxiales 13,16, le plateau 16 étant mobile axialement par rapport au flasque 13 de manière décrite ci-après.

Ce flasque 13, ici métallique, présente à sa périphérie externe une jupe cylindrique 31 d'orientation axiale, dont l'extrémité libre présente un rebord radial dirigé en direction opposée à l'axe de l'ensemble.

C'est sur ce rebord que l'on vient monter le couvercle 17 à l'aide des vis de fixation 18.

Intérieurement le flasque 13 est centré et fixé sur le vilebrequin à l'aide de vis 34 comme visible à la figure 1.

Une pièce de centrage 33 est intercalée entre la tête des vis 34 et la face concernée du flasque 13.

Cette pièce 33 présente à sa périphérie externe un rebord annulaire d'orientation axiale permettant un centrage de la pièce mobile en rotation 4 du dispositif rattrapeur d'usure.

Le plateau de réaction 16 proprement dit, ici en fonte, offre une face de friction pour la garniture de friction 30 concernée du disque de friction 14.

Ce plateau 16 est lié en rotation au flasque 13 par des languettes tangentielles 32 de la même manière que le plateau de pression 20 est lié au couvercle 17.

Pour ce faire les languettes tangentielles 32 sont fixées à l'une de leur extrémité au flasque 13 par des organes de fixation et à leur autre extrémité par des organes de fixation 15, ici des rivets, à une patte radiale, que présente le plateau 16 ici en fonte.

Le plateau 16 peut donc se déplacer axialement par rapport au flasque 13 tout en étant lié en rotation à celui-ci par les languettes 32. Ici plusieurs jeux de languettes 32, réparties régulièrement circonférentiellement, sont prévues.

Ces languettes sont avantageusement adaptées à développer une force axiale de nature à assurer l'empilage axial de l'ensemble du système.

En variante on pourrait prévoir une liaison du type tenon-mortaise, la jupe 31 présentant alors des ouvertures longitudinales dans chacune desquelles s'engagerait une patte formant tenon du plateau 16.

Dans ce cas un ressort est avantageusement prévu pour assurer un serrage de l'empilage des pièces constituant le rattrapeur.

A sa périphérie interne le plateau 16 est prolongé par une collerette annulaire 160, d'orientation transversale, servant à la fixation d'une pièce 5 du mécanisme 11 rapportée sur ladite collerette. En variante la pièce 5 peut être d'un seul tenant avec le plateau 16 en étant venue de moulage avec celle-ci.

On notera que cette collerette 160 est évidée localement pour ventilation de l'espace délimité par le flasque 13 et le plateau 16.

On peut également prévoir des formes adaptées entre le plateau 16 et la pièce 5 pour assurer une ventilation.

La pièce de réarmement 1 est montée dans cet espace. Cette pièce est donc intercalée entre le flasque 13 et le plateau 16 en étant au contact du flasque 13 et associée à celui-ci.

Cette pièce 1 entoure la pièce mobile en rotation 4 du dispositif 11 centrée par la pièce 33. Plus précisément les pièces 4 et 5 ont une forme tubulaire en étant étagées. La pièce 5 a en section en forme de L inversé et présente une portion tubulaire 92 de plus petit diamètre munie d'un pion 96 pour son calage en rotation sur la collerette 160.

Avantageusement la pièce 5 est en matière synthétique comme la pièce 4.

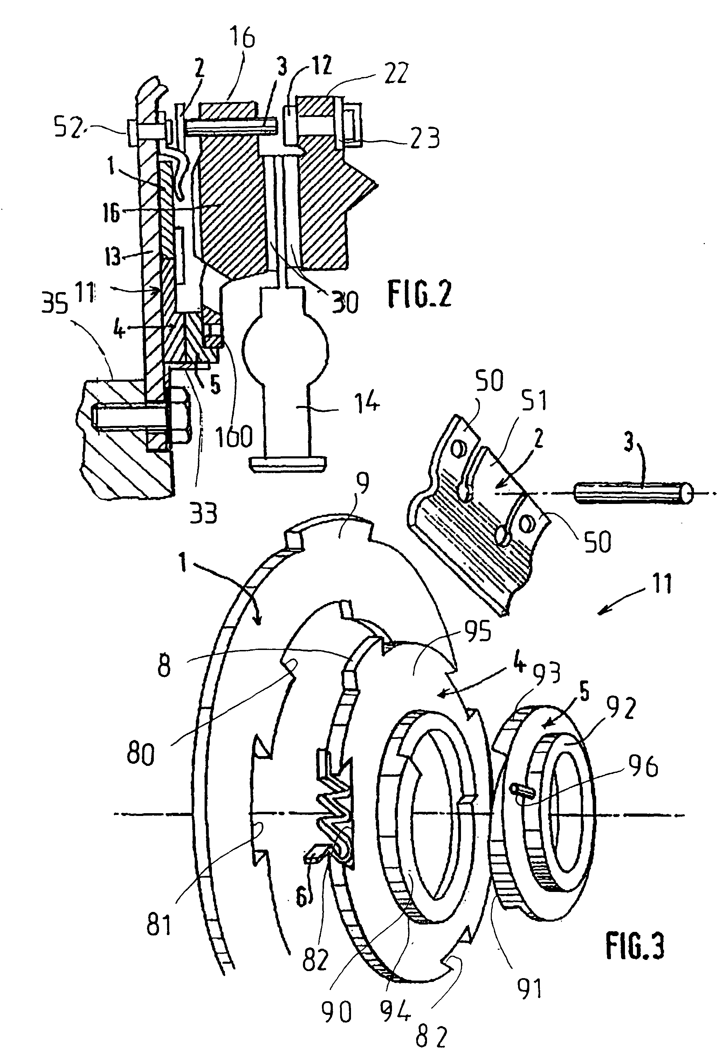

La pièce 5 présente une portion tubulaire 93 (figure 3) de plus grand diamètre dont la face frontale ou tranche présente une partie des moyens de rampes. Ces moyens de rampe consistent ici en au moins deux secteurs 91 formant des rampes hélicoïdales. Ici trois secteurs sont prévus. Cette pièce 5 est fixe en rotation et mobile en translation avec le plateau 16 auquel elle est attelée et associée.

En variante non représentée, la pièce 5 est monobloc avec le plateau 16.

La pièce 4 présente une portion tubulaire 94 de plus petit diamètre de taille complémentaire à celle de la portion 93 de la pièce 5. La tranche ou face frontale de cette portion 94 présente, l'autre partie des moyens de rampe, ici trois rampes 90 de forme complémentaire aux rampes 91. La portion tubulaire 95 de plus grand diamètre de cette pièce 4 présente à sa périphérie externe des échancrures 82 et une patte radiale 8. Les échancrures 82 ont une forme trapézoïdale tronquée avec un fond plat et deux côtés inclinés.

La pièce 4 est fixe en translation et mobile en rotation.

La pièce de réarmement 1 en forme de disque présente à sa périphérie interne des échancrures 81 de forme analogue à celle des échancrures 82, mais inclinées en sens inverse.

Ici trois échancrures 81 et trois échancrures 82 réparties circulairement circonférentiellement sont prévues en vis-à-vis les unes des autres. Des ressorts ondulés 6 à extrémité en forme de dièdre sont montés dans lesdites échancrures 81,82 reconstituant à chacune de leurs extrémités circonférentielles un dièdre.

Ces ressorts 6 constituent les premiers moyens élastiques à action circonférentielle selon l'invention.

La portion 95 de la pièce 4 présente à sa périphérie externe une dent 8 saillante radialement pénétrant à jeu circonférentiel prédéterminé dans une échancrure 80 prévue à la périphérie externe de la pièce de réarmement 1.

Il est ainsi créé des moyens d'engrènement à jeu 8,80 intervenant selon l'invention entre la pièce 4, dite ci-après pièce à rampe d'ajustage, et la pièce de réarmement.

Cette pièce de réarmement est soumise à l'action de seconds moyens élastiques 7 à action circonférentielle, ici un simple ressort à boudin fixé à l'une de ses extrémités à la pièce 1 et à l'autre de ses extrémités au flasque 13. Ce ressort 7 d'armement est incliné, en sorte qu'il agit circonférentiellement.

Il tend à faire tourner la pièce 1 dans le sens des aiguilles d'une montre, son action exercée sur la pièce 1 est supérieure à celle des premiers moyens élastiques 6 formant des moyens élastiques de détente.

La force des moyens élastiques 7 est supérieure à celle des moyens élastiques 6. Cela peut notamment être obtenu en prévoyant que la raideur du ressort 7 est supérieure à celle des ressorts 6.

A sa périphérie externe la pièce 1 est pincée entre le flasque 13 et une pièce 2 en forme de frein élastique. Cette pièce 2 appartient aux moyens de verrouillage selon l'invention et comporte centralement à sa périphérie externe une languette de débrayage 51 encadrée par deux pattes élastiques 50 de fixation trouées chacune pour passage d'un organe de fixation tel qu'un rivet 52 (figure 2) pour fixation du frein 2 au flasque 13.

La périphérie interne de cette pièce 2, ici métallique, est emboutie pour présenter une zone de serrage ponctuelle, ici arrondie, avec la pièce 1. Cette pièce 1 est donc pincée élastiquement entre le flasque 13 et la pièce 2.

On notera que la pièce de réarmement 1 est montée rotative sur la périphérie externe de la pièce 4. Le déclencheur 3 consiste en une goupille montée de manière traversante dans un alésage associé pratiqué à cet effet à la périphérie externe du plateau 16 (figure 2).

En pratique une goupille mécanindus (non visible) est interposée entre l'alésage précité du plateau 16 et la goupille 3 en sorte que cette goupille 3 est montée serrée élastiquement.

L'une des extrémités de la goupille est propre à agir sur la languette 51 du frein 2, tandis que l'autre extrémité de la goupille 3 est destinée à venir en contact avec le rivet 12 de fixation des languettes 23.

Ainsi la tête du rivet 12, solidaire du plateau de pression 20, est destinée à manoeuvrer avec la goupille 3.

Normalement le déclencheur est en contact avec la languette 51 et un jeu existe entre le rivet 12 et la goupille 3. La pièce d'armement est donc verrouillée.

Lorsque les garnitures de friction 30 s'usent, le plateau de pression 20 et donc le rivet 12 se rapprochent de la goupille 3.

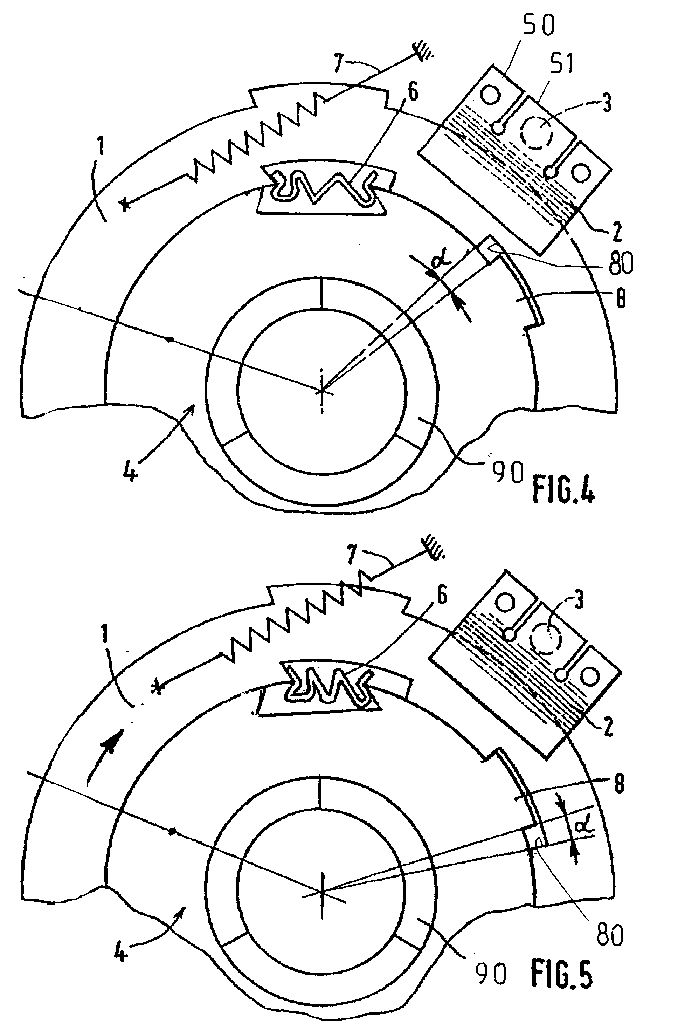

Après un rattrapage d'usure ou lorsque le disque de friction est neuf, on est dans la configuration de la figure 4, l'embrayage étant engagé.

Dans ce cas, le ressort 6 agit dans le sens des aiguilles d'une montre et la patte 8 bute contre l'une des extrémités circonférentielles de l'échancrure 80, un angle α existant (figure 4).

Dans cette configuration la pièce 1 est fixe car elle est pincée par le frein 2 en sorte que le ressort 7 n'exerce pas d'action sur le ressort 6 et que la pièce 1 forme une pièce de butée fixe pour les ressorts 6.

Lorsque les garnitures 30 s'usent la tête du rivet 12 agit sur la goupille 3, laquelle agit sur la languette élastique 51 et libère le frein 2 en position embrayage engagé.

Dans ce cas, la pièce de réarmement 1 (figure 5) tourne dans le sens des aiguilles d'une montre sous l'action du ressort 7 avec compression du ressort 6 de force inférieure, car la pièce 4 est alors fixe puisque l'embrayage est engagé.

On arrive alors dans la configuration de la figure 5 dans laquelle l'angle α est présent entre l'autre bord de la patte 8 et l'autre bord de l'échancrure 80.

Ainsi on a effectué une rotation d'un angle α prédéterminé et ce pendant que l'embrayage est engagé, les pièces 4,5 étant alors immobiles.

Le mécanisme de rattrapage d'usure s'est donc armé d'une valeur déterminée à l'avance, les ressorts 6 étant comprimés.

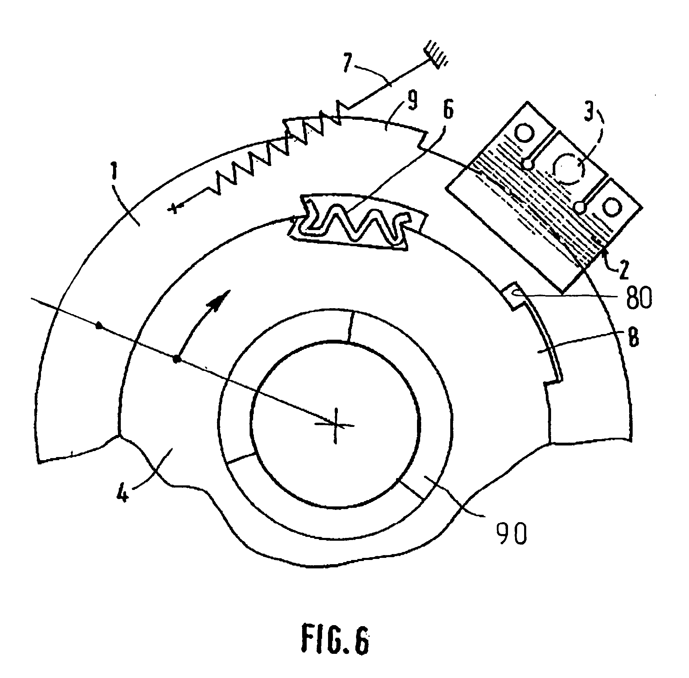

Lorsque l'on désengage l'embrayage, la distance entre le flasque 13 et le plateau 16 peut augmenter en sorte qu'une rotation d'un angle α de la pièce 4 se produit (figure 6).

En effet dans cette position la pièce de réarmement est fixe en étant de nouveau serrée par le frein 2 puisque le plateau de pression s'est éloigné de la goupille 3, ce qui permet un débattement uniquement d'un angle *α.*

La pièce 4, dite pièce d'ajustement, effectue donc une rotation d'un angle α par rapport à sa position de la figure 5, les ressorts 6 se détendant.

Ainsi grâce à l'invention, on effectue une rotation limitée entre les pièces 4 et 5.

On notera que ces pièces 4,5 ne peuvent tourner que dans un seul sens, du fait de l'angle de frottement des rampes 90,91 choisies en conséquence.

Ainsi dans des conditions sévères d'utilisation de l'embrayage on ne rattrapera l'usure que d'un angle *α.* On évite ainsi tous les points singuliers et de trop grand rattrapage.

On notera la faible inertie de la pièce de réarmement montée sous précontrainte. Grâce aux ressorts 6,7 tarés en conséquence son inertie n'influe pas sur le réarmement.

Bien entendu on peut monter le dispositif de rattrapage d'usure au niveau du plateau de pression 20.

Celui-ci présente alors sur sa face arrière une partie 5 à moyens de rampe dont l'extrémité présente des moyens de rampe comme à la figure 1. Cette pièce est donc fixe en rotation et mobile en translation.

La pièce 4 est admise à venir en contact avec la pièce 5 et présente également des moyens de rampe, ici du type hélicoidal comme ceux de la pièce 4.

Ici une pièce 120 est calée en rotation sur le plateau 20 en étant montée mobile axialement par rapport à celui-ci. La pièce 120 présente pour ce faire une partie d'orientation axiale coulissant dans des rainures pratiquées dans un alésage interne du plateau 5.

Pour ce faire la pièce 120 a, à son extrémité libre, une forme de peigne, en sorte qu'un montage à cannelures est réalisé entre le plateau 20 et la pièce 120 centrée par le plateau 20. Cette pièce offre un appui au diaphragme 24 et est prolongée à sa périphérie externe pour porter le frein 2. La pièce de réarmement est donc pincée à sa périphérie externe entre une partie transversale de la pièce 120 et le frein 2.

La pièce de réarmement est montée rotative sur la pièce 4 comme dans les figures 1 à 6 avec intervention de ressorts 6 et 7 non visibles.

On notera que la pièce 120 centre la pièce 4 et porte les pièces 1,4,6,7,2.

Ici le déclencheur est formé par une patte 3 issue du couvercle par découpe et pliage.

Lorsque les garnitures s'usent, le plateau 20 se rapproche de la patte 3 puis le frein 2, par sa languette élastique, vient buter contre la patte 3 qui libère le frein 2.

En variante le déclencheur pourrait être constitué par le diaphragme. Dans ce cas, le frein 2 comporte une partie axiale propre à coopérer avec le diaphragme.

Le dispositif fonctionne donc comme celui de la figure 1.

Néanmoins on appréciera que le dispositif de rattrapage d'usure de la figure 1 ne nécessite pas de modifier le mécanisme d'embrayage 20,24,17 et qu'il est implanté à un endroit moins chaud. En outre l'inertie de la pièce de réarmement 1 est moindre ce qui perturbe le moins possible le fonctionnement.

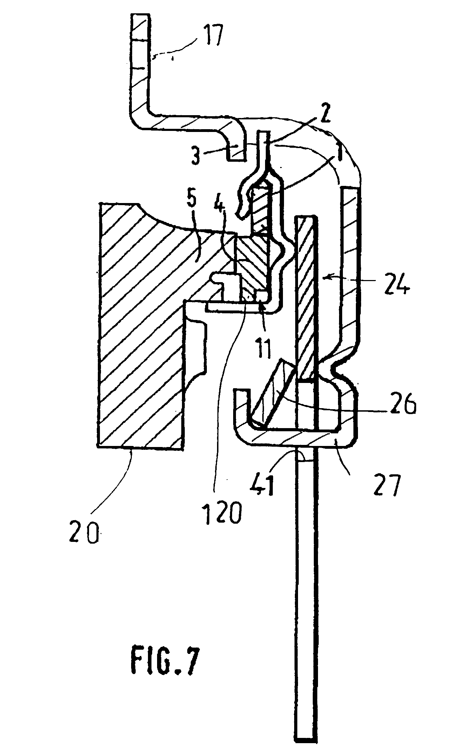

A la figure 7 par contre le dispositif 11 est implanté à un endroit plus chaud.

Bien entendu la présente invention n'est pas limitée à l'exemple de réalisation décrit. En particulier l'embrayage peut être du type tiré, le diaphragme par la partie externe de sa rondelle Belleville s'appuyant alors sur le couvercle et par la périphérie interne de sa rondelle Belleville sur le bossage du plateau de pression. Dans ce cas, il faut agir en traction sur l'extrémité des doigts du diaphragme pour libérer l'embrayage.

En variante au lieu d'un diaphragme, on peut utiliser des moyens élastiques à action axiale sous forme de ressorts à boudin agissant sur le fond 17 du plateau de pression 20, on peut aussi utiliser tout type de moyens de serrage mécanique et/ou hydraulique.

Ces ressorts sont soumis alors à l'action de leviers de débrayage.

On notera que la pièce de réarmement 1 comporte également à sa périphérie externe une patte 9 permettant d'initialiser la position de la pièce 1 par exemple à l'aide d'un outil tel qu'un tournevis.

Bien entendu on peut inverser les structures, la pièce de réarmement présentant alors une patte montée à jeu dans une échancrure de la pièce 4.

Avantageusement la pièce de réarmement 1 forme des moyens indicateurs d'usure.

Les ressorts 6 et 7 peuvent être des ressorts à boudin ou en caoutchouc ou en matière synthétique montés dans des fenêtres.

On notera que le ressort 7 constitue un ressort d'armement et le ressort 6 un ressort de détente.

En variante la pièce d'armement 1 peut présenter des pattes axiales pénétrant à jeu prédéterminé dans des ouvertures de la pièce d'ajustage 4 pour formation des moyens d'engrènement à jeu.

On appréciera, lors de l'usure des garnitures 30, que la force du diaphragme 24 augmente en sorte que l'on utilise cet accroissement d'énergie pour armer le système.

## Revendications

1. Embrayage à friction, notamment pour véhicule automobile, du genre comportant un plateau de réaction (13,16) destiné à être calé en rotation sur un arbre menant (35), un disque de friction (14) destiné à être calé en rotation sur un arbre mené (36) et portant à sa périphérie externe des garnitures de friction (30), un plateau de pression (20), des moyens élastiques à action axiale (24), un couvercle (17) rapporté à fixation sur le plateau de réaction (13,16), des moyens de liaison en rotation (23) intervenant entre le plateau de pression (20) et l'ensemble couvercle (7) - plateau de réaction (13,16) pour liaison en rotation du plateau de pression (20) audit ensemble avec mobilité axiale, dans lequel l'un des plateaux de pression (20) et de réaction (13,16), dit premier plateau, comporte deux parties coaxiales (13,16-20,120) déplaçables axialement l'une par rapport à l'autre à l'encontre d'un mécanisme de rattrapage d'usure (11) intervenant entre lesdites parties et comportant des moyens de rampe intervenant entre deux pièces (4,5), associées respectivement à l'une et à l'autre desdites parties du premier plateau (20-13,16), dont l'une est mobile en rotation et l'autre fixe en rotation, et un déclencheur (3) sensible à l'état d'usure des garnitures de friction (30) pilotant la mise en mouvement desdites parties du premier plateau (13,16), caractérisé en ce qu'il comporte une pièce rotative de réarmement (1) associée à l'une des parties du premier plateau (13,16-20) et soumise à l'action de moyens de verrouillage (2) pilotés par le déclencheur (3), en ce que des premiers moyens élastiques à action circonférentielle (6) et des moyens d'engrènement à jeu (8,80) interviennent entre la pièce de réarmement (1) et la pièce mobile en rotation (4) du mécanisme rattrapeur d'usure (11), en ce que la pièce de réarmement (1) est soumise à l'action de seconds moyens élastiques (7) à action circonférentielle agissant à l'encontre des premiers moyens élastiques (6) en intervenant entre la pièce de réarmement (1) et l'une des parties du premier plateau (13,16-20) et en ce que lesdits seconds moyens élastiques (7) exercent sur la pièce de réarmement (1) un couple supérieur à celui exercé par lesdits premiers moyens élastiques (6).

2. Embrayage selon la revendication 1, caractérisé en ce que les moyens de verrouillage consistent en un frein (2).

3. Embrayage selon la revendication 2, caractérisé en ce que les moyens de verrouillage (2) sont rapportés à fixation sur l'une des parties du premier plateau (13,16) et présentent une languette élastique (51) soumise à l'action du déclencheur (3).

4. Embrayage selon la revendication 3, caractérisé en ce que les moyens de verrouillage (2) présentent une partie profilée pour pincer la pièce de réarmement (1) entre celle-ci et ladite partie du premier plateau.

5. Embrayage selon la revendication 1, caractérisé en ce que la pièce de réarmement (1) est montée rotative sur la pièce mobile en rotation (4) du dispositif rattrapeur d'usure (11).

6. Embrayage selon la revendication 5, caractérisé en ce que la pièce de réarmement (1) entoure ladite pièce mobile (4) du mécanisme de rattrapage d'usure.

7. Embrayage selon la revendication 6, caractérisé en ce que la pièce de réarmement (1) présente intérieurement une échancrure (80) dans laquelle pénètre à jeu circonférentiel une patte (8) de la pièce mobile en rotation (4) du dispositif de rattrapage d'usure (11).

8. Embrayage selon la revendication 1 à 7, caractérisé en ce que les premiers moyens élastiques à action circonférentielle (6) sont montés dans des échancrures (81,82) pratiquées en vis-à-vis respectivement dans la pièce de réarmement (1) et dans la pièce mobile en rotation (4) du mécanisme de rattrapage d'usure (11).

9. Embrayage selon la revendication 1 à 8, caractérisé en ce que les seconds moyens élastiques (7) consistent en un ressort à boudin incliné, ancré dans la pièce de réarmement (1) et dans la partie concernée (13,120) du premier plateau.

10. Embrayage selon la revendication 1 à 9, caractérisé en ce que le plateau de réaction (13,16) est en deux parties, et en ce que la pièce de réarmement (1) et le dispositif de rattrapage d'usure (11) agissent entre les deux parties (13,16) dudit plateau de réaction.

11. Embrayage selon la revendication 10, caractérisé en ce que l'une des parties consiste en un flasque (13) tandis que l'autre des parties consiste en un plateau (16) formant le plateau de réaction proprement dit et offrant une face de friction à la garniture de friction (30) concernée.

12. Embrayage selon la revendication 11, caractérisé en ce que la pièce de réarmement (1) est pincée entre le flasque (13) et les moyens de verrouillage (2).

13. Embrayage selon la revendication 12, caractérisé en ce que le plateau de réaction proprement dit (16) présente à sa périphérie interne une collerette (160) pour montage fixation de la pièce fixe en rotation du mécanisme de rattrapage d'usure (11).

14. Embrayage selon la revendication 13, caractérisé en ce que les pièces du mécanisme de rattrapage d'usure (11) sont centrées par une pièce rapportée à fixation sur le flasque (13).

15. Embrayage selon la revendication 1 à 9, caractérisé en ce que le plateau de pression (20) est en deux parties, et en ce que la pièce de réarmement (1) et le dispositif de rattrapage d'usure (11) agissent entre les deux parties (5,120) dudit plateau de pression.

16. Embrayage selon la revendication 1, caractérisé en ce que la pièce de réarmement (1) forme des moyens indicateurs d'usure.

## Patentansprüche

1. Reibungskupplung, insbesondere für Kraftfahrzeuge, umfassend eine Gegenanpreßplatte (13, 16), die zur drehfesten Anbringung an einer treibenden Welle (35) bestimmt ist, eine Kupplungsscheibe (14), die zur drehfesten Anbringung an einer getriebenen Welle (36) bestimmt ist und an ihrem äußeren Umfang Reibbeläge (30) trägt, eine Druckplatte (20), axial wirksame elastische Mittel (24), einen mittels Befestigung an der Gegenanpreßplatte (13, 16) angebrachten Deckel (17), drehfeste Verbindungsmittel (23), die zwischen der Druckplatte (20) und der Einheit aus Deckel (7) - Gegenanpreßplatte (13, 16) zum Einsatz kommen, um die drehfeste und axial bewegliche Verbindung der Druckplatte (20) mit der besagten Einheit herbeizuführen, wobei eine der Druck- (20) und Gegenanpreßplatten (13, 16), die als erste Platte bezeichnet wird, zwei koaxiale Teile (13, 16-20, 120) umfaßt, die im Verhältnis zueinander axial entgegen einem Verschleißnachstellmechanismus (11) verschiebbar sind, der zwischen den besagten Teilen zum Einsatz kommt und Rampenmittel umfaßt, die zwischen zwei Elementen (4, 5) zum Einsatz kommen, die mit dem einen bzw. dem anderen der besagten Teile der ersten Platte (20-13, 16) verbunden sind, von denen eines drehbeweglich und das andere drehfest ist, und einen für den Verschleißzustand der Reibbeläge (30) empfindlichen Auslöser (3), der die Bewegung der besagten Teile der ersten Platte (13, 16) steuert, **dadurch gekennzeichnet,** daß sie ein drehbares Rückstellelement (1) umfaßt, das mit einem der Teile der ersten Platte (13, 16-20) verbunden und der Wirkung von durch den Auslöser (3) gesteuerten Verriegelungsmitteln (2) ausgesetzt ist, daß erste umfangsmäßig wirksame elastische Mittel (6) und mit Spiel wirksame Eingriffsmittel (8, 80) zwischen dem Rückstellelement (1) und dem drehbeweglichen Element (4) des Verschleißnachstellmechanismus (11) zum Einsatz kommen, daß das Rückstellelement (1) der Wirkung von zweiten umfangsmäßig wirksamen elastischen Mitteln (7) ausgesetzt ist, die entgegen den ersten elastischen Mitteln (6) wirken, wobei sie zwischen dem Rückstellelement (1) und einem der Teile der ersten Platte (13, 16-20) zum Einsatz kommen, und daß die besagten zweiten elastischen Mittel (7) auf das Rückstellelement (1) ein Moment ausüben, das größer als das durch die besagten ersten elastischen Mittel (6) ausgeübte Moment ist,

2. Kupplung nach Anspruch 1,**dadurch gekennzeichnet,** daß die Verriegelungsmittel aus einer Sicherung (2) bestehen.

3. Kupplung nach Anspruch 2, **dadurch gekennzeichnet,** daß die Verriegelungsmittel (2) mittels Befestigung an einem der Teile der ersten Platte (13, 16) angebracht sind und eine der Wirkung des Auslösers (3) ausgesetzte elastische Zunge (51) aufweisen.

4. Kupplung nach Anspruch 3, **dadurch gekennzeichnet,** daß die Verriegelungsmittel (2) einen profilierten Teil aufweisen, um das besagte Rückstellelement (1) zwischen diesem und dem besagten Teil der ersten Platte einzuklemmen.

5. Kupplung nach Anspruch 1, **dadurch gekennzeichnet,** daß das Rückstellelement (1) drehbar auf dem drehbeweglichen Element (4) der Verschleißnachstellvorrichtung (11) gelagert ist.

6. Kupplung nach Anspruch 5, **dadurch gekennzeichnet,** daß das Rückstellelement (1) das besagte bewegliche Element (4) des Verschleißnachstellmechanismus umgibt.

7. Kupplung nach Anspruch 6, **dadurch gekennzeichnet,** daß das Rückstellelement (1) innen eine Aussparung (80) aufweist, in die mit Umfangsspiel ein Ansatz (8) des drehbeweglichen Elements (4) der Verschleißnachstellvorrichtung (11) eingreift.

8. Kupplung nach Anspruch 1 bis 7, **dadurch gekennzeichnet,** daß die ersten umfangsmäßig wirksamen elastischen Mittel (6) in Aussparungen (81, 82) eingesetzt sind, die gegenüberliegend in das Rückstellelement (1) und in das drehbewegliche Element (4) des Verschleißnachstellmechanismus (11) eingearbeitet sind.

9. Kupplung nach Anspruch 1 bis 8, **dadurch gekennzeichnet,** daß die zweiten elastischen Mittel (7) aus einer geneigten Schraubenfeder bestehen, die im Rückstellelement (1) und in dem betreffenden Teil (13, 120) der ersten Platte verankert ist.

10. Kupplung nach Anspruch 1 bis 9, **dadurch gekennzeichnet,** daß die Gegenanpreßplatte (13, 16) aus zwei Teilen besteht und daß das Rückstellelement (1) und die Verschleißnachstellvorrichtung (11) zwischen den beiden Teilen (13, 16) der besagten Gegenanpreßplatte wirken.

11. Kupplung nach Anspruch 10, **dadurch gekennzeichnet,** daß einer der Teile aus einem Flansch (13) besteht, während der andere der Teile aus einer Platte (16) besteht, die die eigentliche Gegenanpreßplatte bildet und eine Reibfläche für den betreffenden Reibbelag (30) aufweist.

12. Kupplung nach Anspruch 11, **dadurch gekennzeichnet,** daß das Rückstellelement (1) zwischen dem Flansch (13) und den Verriegelungsmitteln (2) eingeklemmt ist.

13. Kupplung nach Anspruch 12, **dadurch gekennzeichnet,** daß die eigentliche Gegenanpreßplatte (16) an ihrem inneren Umfang einen Bund (160) für die Montage und Befestigung des drehfesten Elements des Verschleißnachstellmechanismus (11) aufweist.

14. Kupplung nach Anspruch 13, **dadurch gekennzeichnet,** daß die Elemente des Verschleißnachstellmechanismus (11) durch ein mittels Befestigung auf dem Flansch (13) angebrachtes Element zentriert sind.

15. Kupplung nach Anspruch 1 bis 9, **dadurch gekennzeichnet,** daß die Druckplatte (20) aus zwei Teilen besteht und daß das Rückstellelement (1) und die Verschleißnachstellvorrichtung (11) zwischen den beiden Teilen (5, 120) der besagten Druckplatte wirken.

16. Kupplung nach Anspruch 1, **dadurch, gekennzeichnet,** daß das Rückstellelement (1) Verschleißanzeigemittel bildet.

## Claims

1. A friction clutch, especially for a motor vehicle, of the kind comprising a reaction plate (13, 16) which is adapted to be carried on a driving shaft (35) for rotation with the latter, a friction wheel (14) which is adapted to be carried on a driven shaft (36) for rotation with the latter and which carries friction liners (30) at its outer periphery, a pressure plate (20), axially acting resilient means (24), a cover plate (17) which is fastened on the reaction plate (13, 16), rotational coupling means (23) operatively interposed between the pressure plate (20) and the assembly consisting of the cover plate (7) and the reaction plate (13, 16), for coupling the pressure plate (20) to the said assembly for rotation with, and for axial mobility with respect to the latter, wherein one of the plates consisting of the pressure plate (20) and the reaction plate (13, 16), referred to as the first plate, comprises two coaxial parts (13, 16; 20, 120), one of which is displaceable axially with respect to the other against the action of a wear compensating mechanism (11) interposed between the said parts and comprising ramp means working between two members (4, 5), each of which is associated with a respective one of the said parts of the first plate (20; 13, 16), one of the latter being rotatable while the other is fixed against rotation, and a trigger (3) responsive to the state of wear of the friction liners (30), for controlling the initiation of movement of the said parts of the first plate (13, 16), characterised in that it includes a rotatable rearming member (1) associated with one of the parts of the first plate (13, 16; 20) and subjected to the action of locking means (2) which are controlled by the trigger (3), in that first circumferentially acting resilient means (6) and loose coupling means (8, 80) are interposed between the rearming member (1) and the rotatable member (4) of the wear compensating mechanism (11), in that the rearming member (1) is subjected to the action of second circumferentially acting resilient means (7) working against the first resilient means (6) and interposed operatively between the rearming member (1) and one of the parts of the first plate (13, 16; 20), and in that the said second resilient means (7) exert on the rearming member (1) a torque which is greater than that exerted by the said first resilient means (6).

2. A clutch according to Claim 1, characterised in that the locking means comprise a brake (2).

3. A clutch according to Claim 2, characterised in that the locking means (2) are fastened on one of the parts of the first plate (13, 16), and have a resilient tongue (51) which is subjected to the action of the trigger (3).

4. A clutch according to Claim 3, characterised in that the locking means (2) have a profiled portion for clamping the rearming member (1) between the latter and the said part of the first plate.

5. A clutch according to Claim 1, characterised in that the rearming member (1) is mounted for rotation on the rotatable member (4) of the wear compensating device (11).

6. A clutch according to Claim 5, characterised in that the rearming member (1) surrounds the said movable member (4) of the wear compensating mechanism.

7. A clutch according to Claim 6, characterised in that the rearming member (1) has an internal notch (80) into which there penetrates, with a circumferential clearance, a lug (8) of the rotatable member (4) of the wear compensating device (11).

8. A clutch according to Claim 1 to 7, characterised in that the first circumferentially acting resilient means (6) are mounted in notches (81, 82) formed in facing relationship with each other in the rearming member (1) and in the rotatable member (4) of the wear compensating mechanism (11), respectively.

9. A clutch according to Claim 1 to 8, characterised in that the second resilient means (7) consist of an inclined coil spring which is anchored in the rearming member (1) and in the appropriate part (13, 120) of the first plate.

10. A clutch according to Claim 1 to 9, characterised in that the reaction plate (13, 16) is in two parts, and in that the rearming member (1) and the wear compensating device (11) act between the two parts (13, 16) of the said reaction plate.

11. A clutch according to Claim 10, characterised in that one of the parts consists of a support plate (13) while the other one of the parts consists of a plate (16) constituting the reaction plate proper and offering a friction surface to the appropriate friction liner (30).

12. A clutch according to Claim 11, characterised in that the rearming member (1) is clamped between the support plate (13) and the locking means (2).

13. A clutch according to Claim 12, characterised in that the reaction plate proper (16) has at its inner periphery a collar portion (160) for fixedly mounting the member of the wear compensating mechanism (11) that is fixed against rotation.

14. A clutch according to Claim 13, characterised in that the components of the wear compensating mechanism (11) are centred by a member which is fixed on the support plate (13).

15. A clutch according to Claim 1 to 9, characterised in that the pressure plate (20) is in two parts, and in that the rearming member (1) and the wear compensating device (11) work between the two parts (5, 120) of the said pressure plate.

16. A clutch according to Claim 1, characterised in that the rearming member (1) defines wear indicating means.
